# EUROPEAN PATENT APPLICATION

(11) **EP 3 647 894 A1**
(43) Date of publication of application: **06.05.2020**
(21) Application number: 18836590.2
(22) Date of filing: 28.08.2018
(51) Int. Cl.: G05B 23/02

(54) **METHOD AND SYSTEM FOR USING VEHICLE DIAGNOSTIC DEVICE AND VEHICLE DIAGNOSTIC DEVICE**

(71) Applicant: Launch Tech Co., Ltd, Longgang District Shenzhen Guangdong 518000 (CN)
(72) Inventor: LIU, Jun, Shenzhen, Guangdong 518000 (CN); XIAO, Rijun, Shenzhen, Guangdong 518000 (CN)
(74) Representative: Wallinger Ricker Schlotter Tostmann
(86) International application number: PCT/CN2018/102771
(87) International publication number: WO 2020/041982

(57) **Abstract**

The present application pertains to the technical field of vehicles, and provides a method and a system of using vehicle diagnosis equipment, and a vehicle diagnosis equipment, this method includes: receiving a usage request of a user with the vehicle diagnosis equipment, displaying a login interface according to the usage request and receiving login information entered by a user, and sending the login information to a server, wherein the login information includes user account information; acquiring account balance information with the server according to the account information and determining whether the account balance is greater than a preset amount or not, and feedbacking login success information to the vehicle diagnosis equipment if the account balance is greater than the preset amount; and displaying a charging mode of usage with the vehicle diagnosis equipment according to the login success information and granting a corresponding usage permission to the user according to the charging mode of usage selected by the user. The convenience of using the vehicle diagnosis equipment can be provided to the user, the utilization efficiency of the vehicle diagnosis equipment can be improved; meanwhile, the usage permission of the vehicle diagnosis equipment is granted according to the relationship between the balance and the preset amount, which facilitates the user to use without paying cash pledge, so that user's experience is improved.

## Description

### TECHNICAL FIELD

The present application pertains to the technical field of vehicles, and more particularly to a method and a system of using vehicle diagnosis equipment, and a vehicle diagnosis equipment.

### BACKGROUND

With the development of social economy, people's living level is continuously improved, more and more vehicles enter people's lives; meanwhile, people are now paying more and more attention to maintenance and repair of vehicles.

The vehicle diagnosis equipment is a professional instrument particularly aimed at vehicle detection, which can detect a performance of a vehicle in real time and perform detection on vehicle faults; however, private vehicle diagnosis equipment is high in cost currently, and due to the fact that the private vehicle diagnosis equipment is in an idle state most of time, a utilization rate of the private vehicle diagnosis equipment is not high. In addition, vehicle diagnosis equipment in a vehicle maintenance plant can only be used by a fixed maintenance technician in the vehicle maintenance plant, when there are many customers who need to queue up for the fixed maintenance technicians in the maintenance plant, the fixed maintenance technician in a maintenance factory can't simultaneously utilize a plurality of vehicle diagnostic equipment in the maintenance plant to perform diagnosis, which makes an idle time of the vehicle diagnosis equipment to be long, so that the utilization efficiency is low, and consumer demand of the customers cannot be met.

### SUMMARY

In view of this, embodiments of the present application provide a method and a system of using vehicle diagnosis equipment, and a vehicle diagnosis equipment, which aim at solving a problem that consumer demand of customers cannot be met due to low utilization efficiency of the existing vehicle diagnosis equipment.

In a first aspect, embodiments of the present application provide a method of using a vehicle diagnosis equipment, comprising: receiving a usage request of a user with the vehicle diagnosis equipment, displaying a login interface according to the usage request and receiving login information entered by a user, and sending the login information to a server, wherein the login information includes user account information; acquiring account balance information with the server according to the account information and determining whether the account balance is greater than a preset amount or not, and feedbacking login success information to the vehicle diagnosis equipment if the account balance is greater than the preset amount; and displaying a charging mode of usage with the vehicle diagnosis equipment according to the login success information and granting a corresponding usage permission to the user according to the charging mode of usage selected by the user.

In a second aspect, embodiments of the present application provide a method of using a vehicle diagnosis equipment, the method is executed by the vehicle diagnosis equipment and comprises steps of: receiving a usage request of a user, and displaying a login interface according to the usage request; receiving login information entered by the user, the login information includes user account information; sending the login information to a server in order that the server obtains the account balance information according to the account information and returns login success information if the account balance information is determined to be greater than a preset amount; displaying a charging mode of usage according to the login success information and granting a corresponding usage permission to the user for the user to use according to the charging mode of usage selected by the user.

In one embodiment, the charging mode of usage includes a pay per view mode, when the received charging mode of usage selected by the user is the pay per view mode; the step of granting a corresponding usage permission to the user for the user to use according to a pay per view mode selected by the user particularly comprises: displaying diagnosis software selection interface with at least two vehicle type diagnosis software and acquiring usage rules of pay per view for the at least two vehicle type diagnosis software; receiving selection for a vehicle type diagnosis software of a user and reminding the user of a corresponding usage rules of pay per view; determining a target vehicle type diagnosis software according to a confirmation instruction of the user, and loading the target vehicle type diagnosis software, in order that the user uses the target vehicle type diagnosis software according to the usage rules of pay per view.

In one embodiment, the charging mode of usage includes a pay per usage duration mode, when the received charging mode of usage selected by the user is the pay per usage duration mode; the step of granting a corresponding usage permission to the user for the user to use according to the charging mode of usage selected by the user particularly comprises: displaying diagnosis software selection interface with at least two vehicle type diagnosis software and acquiring usage rules of pay by usage duration of the at least two vehicle type diagnosis software; receiving selection for a vehicle type diagnosis software of the user, and reminding the user of a corresponding usage rules of pay per usage duration; determining the target vehicle type diagnosis software according to the confirmation instruction of the user and loading the target vehicle type diagnosis software in order that the user uses the target vehicle diagnosis software according to the usage rules of pay per usage duration.

In one embodiment, the method further comprises: receiving a request for ending use from the user; calculating usage charges and reminding the user according to the request for ending use; sending the usage charges and the request for ending use to the server after the confirmation instruction of the user is obtained in order that the server deducts the amount corresponding to the usage charges from the account balance, performs an automatic profit distribution according to a profit distribution rule and returns settlement success information; and determining an end of use according to the received settlement success information.

In one embodiment, before the step of receiving the request for ending use from the user, the method further comprises: receiving abnormal prompt information and account balance change information of the account information sent by the server; displaying the abnormal prompt information to the user; and receiving processing for the abnormal information by the user and transmitting a processing result to the server.

In a third aspect, the present application provides a method of using a vehicle diagnosis equipment, the method is applied to a server and comprises: receiving login information sent by a vehicle diagnosis equipment, wherein the login information includes user account information; acquiring account balance information according to the user account information; determining whether the account balance is greater than a preset amount or not, and returning login success information to the vehicle diagnosis equipment if the account balance is greater than the preset amount.

In one embodiment, the method further comprises: receiving usage charges information and a request for ending use sent by the vehicle diagnosis equipment; deducting an amount corresponding to the usage charges from the account balance according to the request for ending use; and performing an automatic profit distribution according to a profit distribution rule, and returning settlement success information to the vehicle diagnosis equipment.

In one embodiment, before the step of receiving usage charges information and a request for ending use sent by the vehicle diagnosis equipment the method further comprises: monitoring the account balance information; acquiring changed account balance information when a change of the account balance information is detected; determining whether the changed account balance information is greater than the preset amount or not; and sending the abnormal prompt information and the account balance change information to the vehicle diagnosis equipment in order that the vehicle diagnosis equipment prompts the user and returns a processing result of the user.

In a fourth aspect, embodiments of the present application provide a system of using a vehicle diagnosis equipment, the system comprises the vehicle diagnosis equipment and a server; the vehicle diagnosis equipment is configured to: receive a usage request of a user, display a login interface and receive a login information entered by the user, and send the login information to the server, the login information including user account information, display a charging mode of usage according to login success information when the server returns the login success information and grant a corresponding usage permission to the user according to the charging mode of usage selected by the user; the server is configured to: acquire account balance information according to the account information, determine whether the account balance is greater than a preset amount or not, and feedback login success information to the vehicle diagnosis equipment if the account balance is greater than the preset amount.

In a fifth aspect, embodiments of the present application provide a vehicle diagnosis equipment, comprising a memory, a processor and computer program stored in the memory and executable by the processor, when the computer program is executed, the processor is configured to implement: receiving a usage request of a user, and displaying a login interface according to the usage request; receiving login information entered by the user, wherein the login information includes user account information; sending the login information to a server in order that the server obtains the account balance information according to the account information and returns login success information if the account balance information is determined to be greater than a preset amount; displaying a charging mode of usage according to the login success information and granting a corresponding usage permission to the user for the user to use according to the charging mode of usage selected by the user.

In one embodiment, the processor is configured to execute the computer program to implement method steps comprising: the charging mode of usage includes a pay per view mode, granting a corresponding usage permission to the user for the user the user according to the pay per view mode selected by the user when the received charging mode of usage selected by the user is the pay per view mode, said granting a corresponding usage permission to the user for the user the user according to the pay per view mode selected by the user particularly comprises: displaying diagnosis software selection interface with at least two vehicle type diagnosis software and acquiring usage rules of pay per view of the at least two vehicle type diagnosis software; receiving selection for a vehicle type diagnosis software of a user and reminding the user of a corresponding usage rules of pay per view; determining a target vehicle type diagnosis software according to a confirmation instruction of the user, and loading the target vehicle type diagnosis software in order that the user uses the target vehicle type diagnosis software according to the usage rules of pay per view.

In one embodiment, the processor is further configured to execute the computer program to implement method steps comprising: the charging mode of usage includes a pay per usage duration mode, granting a corresponding usage permission to the user for the user to use according to the pay per usage duration mode selected by the user when the received charging rule of usage selected by the user is the pay per usage duration mode, said granting a corresponding usage permission to the user for the user to use according to the pay per usage duration mode selected by the user particularly comprises: displaying diagnosis software selection interface with at least two vehicle type diagnosis software and acquiring usage rules of pay by usage duration of the at least two vehicle type diagnosis software; receiving selection for a vehicle type diagnosis software of the user, and reminding the user of a corresponding usage rules of pay per usage duration; determining the target vehicle type diagnosis software according to the confirmation instruction of the user and loading the target vehicle type diagnosis software in order that the user uses the target vehicle diagnosis software according to the usage rules of pay per usage duration.

In one embodiment, the processor is configured to execute the computer program to implement method steps including: receiving a request for ending use from the user; calculating usage charges and reminding the user according to the request for ending use; sending the usage charges and the request for ending use to the server after the confirmation instruction of the user is obtained in order that the server deducts an amount corresponding to the usage charges from the account balance, performs an automatic profit distribution according to a profit distribution rule and returns settlement success information; and determining a end of use according to the received settlement success information.

In one embodiment, the processor is further configured to execute the computer program to implement method steps including: receiving abnormal prompt information and account balance change information of the account information sent by the server; displaying the abnormal prompt information to the user; and receiving processing for the abnormal information by the user and transmitting a processing result to the server.

In a six aspect, embodiments of the present application provide a server, comprising a memory, a processor and computer program stored in the memory and executable by the processor, the processor is configured to execute the computer program to implement method steps including: receiving login information sent by a vehicle diagnosis equipment, the login information includes user account information; acquiring account balance information according to the user account information; and determining whether the account balance is greater than a preset amount or not, and returning login success information to the vehicle diagnosis equipment if the account balance is greater than the preset amount.

In one embodiment, the processor is further configured to execute the computer program to implement method steps including: receiving usage charges information and a request for ending use sent by the vehicle diagnosis equipment; deducting an amount corresponding to the usage charges from the account balance according to the request for ending use; and performing an automatic profit distribution according to a profit distribution rule and returning settlement success information to the vehicle diagnosis equipment.

In one embodiment, the processor is further configured to execute the computer program to implement method steps including: monitoring the account balance information before receiving the usage charges information and the request for ending use sent by the vehicle diagnosis equipment; acquiring changed account balance information when a change of the account balance information is detected; determining whether the changed account balance information is greater than the preset amount or not; and sending, if the changed account information is less than the preset amount, the abnormal prompt information and the account balance change information to the vehicle diagnosis equipment in order that the vehicle diagnosis equipment prompts the user and returns a processing result of the user.

It can be seen from above that, in the embodiments of the present application, the usage request of the user is received through the vehicle diagnosis equipment, the login interface is displayed according to the usage request and the login information entered by the user is received, the login information is sent to the server, the login information includes the user account information; the server acquires the account balance information according to the account information, and determines whether the account balance is greater than the preset amount or not, the login success information is returned to the vehicle diagnosis equipment if the account balance is greater than the preset amount; the vehicle diagnosis equipment displays the charging mode of usage according to the login success information, and grants the corresponding usage permission to the user for the user to use according to the charging mode of usage selected by the user. According to the embodiment of the present application, the convenience of using the vehicle diagnosis equipment can be provided to the user, and the utilization efficiency of the vehicle diagnosis equipment can be improved; meanwhile, the usage permission of the vehicle diagnosis equipment is granted according to the relationship between the balance and the preset amount, which facilitates the user to use without paying cash pledge, so that the user experience is improved.

### BRIEF DESCRIPTION OF THE DRAWINGS

In order to describe the technical solutions in the embodiments of the present application more clearly, the embodiments or the accompanying drawings that need to be described in related art is briefly introduced below.
FIG.1 illustrates a structural schematic view of a system of using vehicle diagnosis equipment provided by embodiment one of the present application;
FIG. 2 illustrates a schematic flow chart of a method of using vehicle diagnosis equipment provided by embodiment one of the present application;
FIG. 3 illustrates a schematic flow chart of a method of using vehicle diagnosis equipment provided by embodiment two of the present application;
FIG. 4 illustrates a schematic flow chart of a method of using vehicle diagnosis equipment provided by embodiment three of the present application;
FIG. 5 illustrates a schematic flow chart of a method of using vehicle diagnosis equipment provided by embodiment four of the present application;
FIG. 6 illustrates a schematic flow chart of a method of using vehicle diagnosis equipment provided by embodiment five of the present application;
FIG. 7 illustrates a structural schematic view of vehicle diagnosis equipment provided by embodiment six of the present application; and
FIG. 8 illustrates a structural schematic view of a server provided by embodiment seven of the present application.

### DESCRIPTION OF THE EMBODIMENTS

In the following description, in order to describe but not intended to limit, concrete details such as specific system structure, technique, and so on are proposed, thereby facilitating comprehensive understanding of the embodiments of the present application. In some other conditions, detailed explanations of method, circuit, device and system well known to the public are omitted, so that unnecessary details can be prevented from obstructing the description of the present application.

### Embodiment one

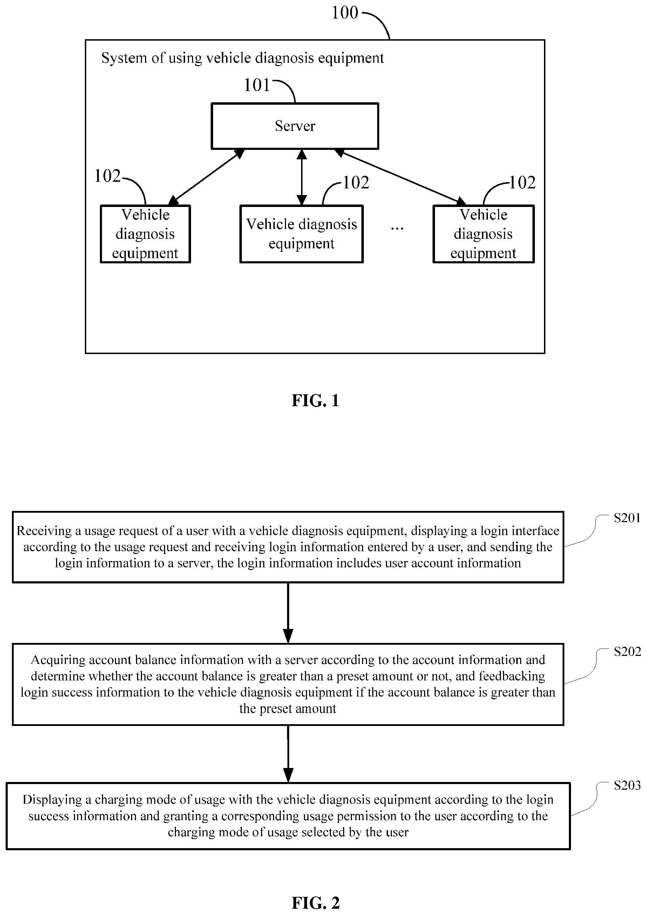

Embodiment one of the present application provides a method of using the vehicle diagnosis equipment, which is applied to the system of using the vehicle diagnosis equipment, as shown in FIG. 1, the system 100 of using the vehicle diagnosis equipment comprises: a server 101, and a plurality of vehicle diagnosis equipment 102 which are in communication connection with the server 101, the vehicle diagnosis equipment can be previously placed in a specific area with a larger traffic flow, such as parking lots of some communities, a shared maintenance plant or a traditional maintenance plant or other specific areas. The vehicle diagnosis equipment can be the vehicle diagnosis equipment which integrates the internet of things module, such as NB-Iot (Narrow Band Internet of Things) chip, Zigbee chip, Wi-Fi chip, Z-wave chip, Lora chip, or Sigfox chip which is implemented based on NB-IoT technology, so that the vehicle diagnosis equipment is in communication connection with the server.

In a specific application scenario, the vehicle diagnosis equipment may be placed in a specific area in advance, the specific area can be such as a parking lot of a shopping mall, a parking lots of some communities, a traditional vehicle maintenance plant, a shared vehicle maintenance plant, and the like. When a user needs to use the vehicle diagnosis equipment to perform diagnosis on the vehicle process, he/she can login and use the vehicle diagnosis equipment in the aforesaid special area through logining information.

As shown in FIG. 2, the method of using the vehicle diagnosis equipment provided by the embodiment includes:
step 201, receiving a user's usage request with the vehicle diagnosis equipment, displaying a login interface according to the usage request and receiving login information entered by a user, and sending the login information to the server, where the login information includes the user account information.

In the embodiment of the present application, when the user needs to use the vehicle diagnosis equipment, he/she can submit the usage request by pressing a touch key or an object key of the vehicle diagnosis equipment, the vehicle diagnosis equipment receives the usage request of the user, and displays a preset login interface to the user according to the usage request, so that the user can receive the login information input by himself/herself through the displayed login interface, the login information includes the account information of the user (such as the account information and the password information and the like). When the vehicle diagnosis equipment receives the login information of the user, the login information is sent to the server to be verified.

Step 202, acquiring account balance information with the server according to the account information, and determining whether the account balance is greater than a preset amount or not, and feedbacking the login success information to the vehicle diagnosis equipment if the account balance is greater than the preset amount.

In the embodiment of the present application, when the server receives the user login information sent by the vehicle diagnosis equipment, the corresponding account balance information is obtained according to the account information in the login information, and whether the account balance information is greater than the preset amount or not is determined, that is, whether the balance in the user account information is enough or not is detected.

In one embodiment, when the server receives the user login information sent by the vehicle diagnosis equipment, whether the login information is matched with the login information previously stored by the user is verified according to the login information, if the login information is matched with the pre-stored login information, the corresponding account balance information is acquired, and whether the account balance information is greater than the preset amount or not is judged; and login success information is returned to the vehicle diagnosis equipment if the account balance information is greater than the preset amount.

For example, in a specific application scenario, after a user A submits the login information through the vehicle diagnosis equipment, the vehicle diagnosis equipment A sends the login information of the user A to the server, the server verifies the login information of the user A firstly, more particularly, the server can verify identity information in the login information (such as verify whether the account number and the password are matched with an account number and a password which are previously stored by the user A); if the verification is successful, the balance in the account of the user A is obtained, and whether the balance in the account A is greater than a preset amount (e.g., the preset amount is 50 RMB or other amount) is determined; when the account balance of the user A is greater than the preset amount, the server sends the login success information to the vehicle diagnosis equipment, so that the usage permission of related diagnosis software operated by the vehicle diagnosis equipment is granted to the user A when the vehicle diagnosis equipment receives the login success information sent by the server, in this way, the user A can use the vehicle diagnosis equipment to perform diagnosis on the performance of the vehicle.

Step 203, displaying a charging mode of usage with the vehicle diagnosis equipment according to the login success information and granting the corresponding usage permission to the user for the user to use according to the charging mode of usage selected by the user.

In the embodiment of the present application, when the vehicle diagnosis equipment receives the login success information returned by the server, preset selectable charging mode of usages are displayed, for example, the charging mode of usage includes a pay per view mode, a pay per usage duration mode, and the like. The user can select according to the displayed charging mode of usage, when the vehicle diagnosis equipment receives the usage permission corresponding to the charging mode of usage selected by the user, it grants the corresponding usage permission to the user, so that the user can use the vehicle diagnosis equipment.

It can be seen that, in the embodiment of the present application, the usage request of the user is received through the vehicle diagnosis equipment, the login interface is displayed according to the usage request, the login information entered by the user is received, and the login information is sent to the server, the login information includes the user account information; the server acquires the account balance information according to the account information, and determines whether the account balance is greater than the preset amount or not, if the account balance is greater than the preset amount, the login success information is returned to the vehicle diagnosis equipment; the vehicle diagnosis equipment displays the charging mode of usage according to the login success information, and grants the corresponding usage permission to the user for the user to use according to the charging mode of usage selected by the user. According to the embodiment of the present application, the convenience of using the vehicle diagnosis equipment can be provided to the user, and the utilization efficiency of the vehicle diagnosis equipment can be improved; meanwhile, the usage permission of the vehicle diagnosis equipment is granted according to the relationship between the balance and the preset amount, which facilitates the user to use without paying cash pledge, and the user experience is improved.

### Embodiment two

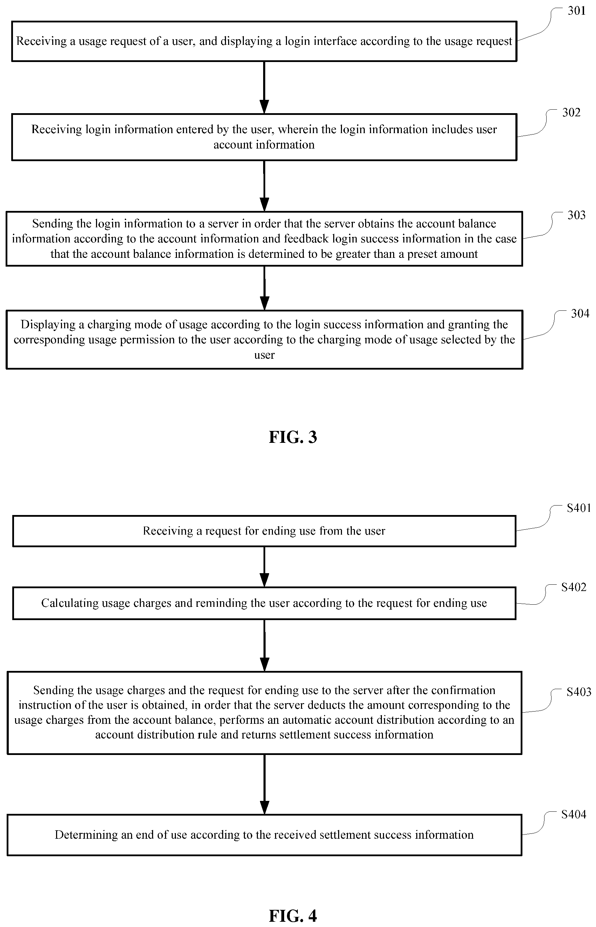

A method of using the vehicle diagnosis equipment provided by embodiment two of the present application is described below, the method in the embodiment is applied to vehicle diagnosis equipment, regarding the part of this embodiment that is the same or similar to that of embodiment one, reference can be made to relevant descriptions in embodiment one, and it is not repeatedly described herein. As shown in FIG. 3, the method of using the vehicle diagnosis equipment in this embodiment comprises:
step 301, receiving a usage request of a user, and displaying a login interface according to the usage request.

In this embodiment of the present application, when the user needs to use the aforesaid vehicle diagnosis equipment, he/she can submit the usage request by pressing a touch key or an object key of the vehicle diagnosis equipment, the vehicle diagnosis equipment receives the usage request of the user, and displays a preset login interface to the user according to the usage request, so that the user can receive the login information entered by the user through the displayed login interface.

Step 302, receiving login information entered by the user, the login information includes user account information.

In this embodiment of the present application, the vehicle diagnosis equipment receives the login information input by the user, wherein the login information includes information account information of the user (e.g., account information and password information, and the like).

Step 303, sending the login information to a server in order that the server obtains the account balance information according to the account information, and returns login success information if the account balance information is determined to be greater than the preset amount.

In this embodiment of the present application, when the vehicle diagnosis equipment receives the login information of the user, the login information is sent to the server, so that the server receives login information of the user sent by the vehicle diagnosis equipment, acquires corresponding account balance information according to the account information in the login information, and determines whether the account balance information is greater than the preset amount or not, that is, detecting whether the balance in the account information of the user is sufficient or not; when it is determined that the account balance is greater than the preset amount, the login success information is returned to the vehicle diagnosis equipment; when the account balance is determined to be less than the preset amount, login failure information is returned to the vehicle diagnosis equipment, and the vehicle diagnosis equipment is enabled to remind the user of recharging.

Step 304, displaying a charging mode of usage according to the login success information, and granting corresponding usage permission to the user for the user to use according to the charging mode of usage selected by the user.

In this embodiment of the present application, when the vehicle diagnosis equipment receives the login success information returned by the server, preset selectable charging modes of usage are displayed, for example, the charging modes of usage include a pay per view mode, a pay per usage duration mode, and the like. The user can select according to the displayed charging modes of usage, when the vehicle diagnosis equipment receives the charging mode of usage selected by the user, it grants the corresponding usage permission to the user in order that the user uses the vehicle diagnosis equipment.

In one embodiment, the charging modes of usage include the pay per view mode, when the received charging mode of usage selected by the user is the pay per view mode, the corresponding usage permission is granted to the user for the user to use according to the pay per view mode selected by the user; said granting a corresponding usage permission to the user for the user to use according to the pay per view mode selected by the user particularly includes: displaying diagnosis software selection interface with at least two vehicle type diagnosis software and acquiring usage rules of pay per view of the at least two vehicle type diagnosis software; receiving the vehicle type diagnosis software selected by the user, and reminding the user of the corresponding usage rules of pay per view; determining target vehicle type diagnosis software according to confirmation instruction of the user, and loading the target vehicle type diagnosis software in order that the user uses the target vehicle type diagnosis software according to the usage rules of pay per view. It can be understood that, when the received charging mode of usage is selected by the user to be the pay per view mode, at least two preset vehicle type diagnosis software interfaces are displayed on the vehicle diagnosis equipment, and the usage rules of pay per view corresponding to the vehicle type diagnosis software under the interface is acquired; when a corresponding selection of the user based on the at least two displayed vehicle type diagnosis software interfaces is received, the user is remind of the usage rules of pay per view corresponding to the vehicle mode diagnosis software selected by the user, in particular, the user can be reminded of the corresponding usage rules of pay per view in the manner of such as textual displaying or voice broadcasting; if a confirmation of selection of the target vehicle type diagnosis software is received, the target vehicle type software is determined according to the confirmation command of the user, and the target vehicle type diagnosis software is loaded in order that the user uses the target vehicle type diagnosis software according to the corresponding usage rules of pay per view.

In one embodiment, the aforesaid usage rules of pay per view can be: when the user selects the target vehicle type diagnosis software, the user is remind of the usage duration of the corresponding preset usage rules of pay per view of the target diagnosis software. When the user uses the target diagnosis software to count time, and when the difference between the counted usage duration and the usage duration of the target diagnosis software is less than preset time interval, the user is reminded that the charging mode of usage will be switched from the pay per view mode to the pay per usage duration mode when the counted usage duration is equal to the usage duration of the target diagnosis software. Of course, when the user starts to use the target diagnosis software, the user can also be reminded that the charging mode of usage can be switched from the pay per view mode into the pay per usage duration mode when the counted usage duration is equal to the target diagnosis software.

In one embodiment, the charging mode of usage includes pay per usage duration mode, when the received charging mode of usage selected by the user is the pay per usage duration mode, the corresponding usage permission is granted to the user for the user to use according to the pay per usage duration mode selected by the user; said granting a corresponding usage permission to the user for the user to use according to the pay per usage duration mode selected by the user particularly includes: displaying diagnosis software selection interface with at least two vehicle type diagnosis software and acquiring usage rules of pay per usage duration of the at least two vehicle type diagnosis software; receiving single vehicle type diagnosis software selected by the user, and reminding the user of the usage rules of pay per usage duration; determining the target vehicle type diagnosis software according to the confirmation instruction of the user, and loading the target vehicle type diagnosis software in order that the user uses the target vehicle diagnosis software according to the usage rules of pay per usage duration. It can be understood that, when the received charging mode of usage selected by the user is the pay per usage duration mode, at least two vehicle type diagnosis software interfaces are displayed on the vehicle diagnosis equipment, and the usage rules of pay per usage duration corresponding to the vehicle type software under the interface are obtained; if the single vehicle type diagnosis software selected by the user is received, the user is reminded of the usage rules of pay per usage duration corresponding to the vehicle diagnosis software selected by the user. Particularly, the user can be reminded of the corresponding usage rules of pay per usage duration in the manner of such as textual displaying or voice broadcasting and the like; if a confirmation of the target vehicle type diagnosis software selected by the user is received, the target vehicle type software is determined according to the confirmation instruction of the user, and the target vehicle type diagnosis software is loaded in order that the user uses the target vehicle type diagnosis software according to the corresponding usage rules of pay per usage duration.

In one embodiment, when the user selects the pay per usage duration mode, if a plurality of vehicle type diagnosis software selected by the user is received, the charging mode of usage is automatically switched from the pay per usage duration mode to the pay per view mode.

It can be seen that, in the embodiment of the present application, since the user can select the charging mode of usage as needed reasonably, on one hand, an economical efficiency of use of the user is improved, on the other hand, the utilization efficiency of the vehicle diagnosis equipment is improved; meanwhile, the usage permission of the diagnostic equipment is granted according to the relationship between the balance and the preset amount in order that the user uses the vehicle diagnosis equipment without paying cash pledge, a user experience is improved.

### Embodiment three

A method of using the vehicle diagnosis equipment provided by embodiment two of the present application is described below, the method of using the vehicle diagnosis equipment in this embodiment is applied to vehicle diagnosis equipment, this embodiment is based on embodiment two and further describes the steps in embodiment two, regarding the part of this embodiment that is the same or similar to that of embodiment two, reference can be made to relevant descriptions in embodiment two, and it is not repeatedly described herein. As shown in FIG. 4, the method of using vehicle diagnosis equipment further comprises:
step 401, receiving a request for ending use from a user.

In the embodiment of the present application, when a user uses the vehicle detection equipment to finish detection of the vehicle, a request for ending use can be submitted.

Step 402, calculating usage charges and reminding the user according to the request for ending use.

In the embodiment of the present application, when the vehicle diagnosis equipment receives a request for ending use, the usage charges is calculated, and the user is reminded of confirming whether a use should be ended and whether a payment should be done according to the calculated usage charges. The usage charges can be calculated according to use information of the user. The usage information includes pay per view mode, pay per usage duration mode, and pay per view and pay per usage duration mode, the usage charges is calculated according to the preset charging rule of pay per view and pay per usage duration.

Step 403, sending, after the confirmation instruction of the user is acquired, the usage charges and the request for ending use to the server in order that the server deducts an amount corresponding to the usage charges from the account balance, and performs an automatic profit distribution according to a profit distribution rule, and returns the settlement success information.

In the embodiment of the present application, after the confirmation instruction of the user is received, the usage charges and the request for ending use are sent to the server in order that the server deducts the amount corresponding to the usage charges from the account balance, the automatic profit distribution is performed according to the profit distribution rule, and the settlement success information is returned to the vehicle diagnosis equipment. For example, a profit distribution rule which is set and stored in advance is sharing in proportion and according to the income of the user using the vehicle diagnosis equipment; for example, multiple participants such as an investor of the vehicle detection equipment, an operating and maintenance team responsible for detection and maintenance, a service institution of a server of the vehicle detection equipment and the like account for a certain proportion respectively. In practical application, setting can be done by the multiple participants by negotiation together. The amount of corresponding proportion of the user payment possessed by the plurality of participants is respectively sent to the accounts of the plurality of participants, and the settlement success information is returned to the vehicle diagnosis equipment.

Step 404: determining a end of use according to the received settlement success information.

In the embodiment of the present application, when the settlement success information returned by the server is received, the end of use is confirmed, and the usage permission of the vehicle diagnosis software is prohibited.

In one embodiment, before the request for ending use of the user is received, the method further comprises: receiving the abnormal prompt information sent by the server and the account balance change information of the account information; displaying the abnormal prompt information to the user; receiving the abnormal information processed by the user and sending the processing result to the server. When the user uses the vehicle diagnosis equipment to perform vehicle diagnosis, the abnormal information is displayed if the abnormal information and the account balance change information sent by the server are received, so that the user can process the abnormal information and send the processing result to the server. The abnormal prompt information sent by the server can be monitored by the server by monitoring the account balance information; the changed account balance information is acquired when the change of the account balance information is detected; whether the changed account balance is greater than the preset amount or not is determined; the abnormal prompt information and the account balance change information are sent to the vehicle diagnosis equipment if the changed account balance is less than the preset amount. Particularly, in the process of using the vehicle diagnosis equipment to perform diagnosis by the user, the vehicle diagnosis equipment sends the use information of the user to the server in real time, and the server calculates the usage charges in real time according to the use information, monitors and determines whether the amount in the account balance which is deducted by the usage charges is less than the preset amount or not according to the usage charges calculated in real time; the server sends abnormal prompt information to the vehicle diagnosis equipment when the amount in the account balance which is deducted by the usage charges is smaller than the preset amount.

In one embodiment, if the abnormal information can be determined by the server by determining that the amount in the account balance of the user is less than the preset amount, the abnormal information which displays insufficient balance is sent to the vehicle diagnosis equipment, the vehicle diagnosis equipment displays the abnormal information to the user, if the vehicle diagnosis equipment receives the processing result of the abnormal information confirmed by the user, the processing result is returned to the server in order that the server calls a payment interface to the vehicle diagnosis equipment for the user to recharge, the vehicle diagnosis equipment can be continuously used to perform diagnosis by the user after the completion of recharging of the user is received; and if the vehicle detection equipment receives the operation of not processing the abnormal information confirmed by the user, the user can continue to use the vehicle diagnosis equipment to perform diagnosis on the vehicle; however, the diagnosis data and the diagnosis result are not displayed after the operation of vehicle diagnosis performed by the user is completed.

In one embodiment, said calling the payment interface to the vehicle diagnosis equipment for the user to recharge can be calling a pre-defined payment page, an icon with a URL address of a payment platform is included in the payment page, the third party payment platform can be a third party payment platform such as various network banks, Wechat, and Alipay. After the server receives the icon selected by the user and sent by the vehicle diagnosis equipment, a recharging request is sent to the corresponding third party recharging platform, when the third party recharging platform responds to the request, verification information which is about to be input by the third party payment platform is sent to the vehicle diagnosis equipment, so that the user completes payment. If the result of successful recharging returned by the third party payment platform is received, the user account is recharged.

In one embodiment, the vehicle diagnosis equipment may generate a diagnosis report according to diagnosis data and diagnosis result and reminder the user of confirming whether the diagnosis report is submitted or not; and when a submission of the diagnosis report confirmed by the user is received, the diagnosis report is sent to the server to be stored and referenced by other users. Moreover, the award value corresponding to the account associated with the user is distributed by the server, the reward value can be award points or other reward in the form of virtual currency, the user can exchange for value-added services or gifts through the reward values. Particularly, the diagnosis report can be generated according to the diagnosis data and the diagnosis result and through a pre-defined template.

It can be seen that, in the embodiment of the present application, by monitoring the user account balance information in real time, continuing to use until a settlement is done normally under the condition that the balance is normal, and do not displaying the diagnosis data and the diagnosis result under the condition that the balance is abnormal, in one aspect, the normal use requirement of the user is guaranteed, in another aspect, proper earnings of an owner of the equipment is ensured, such that the economic benefits of the vehicle diagnosis equipment can be well guaranteed.

### Embodiment four

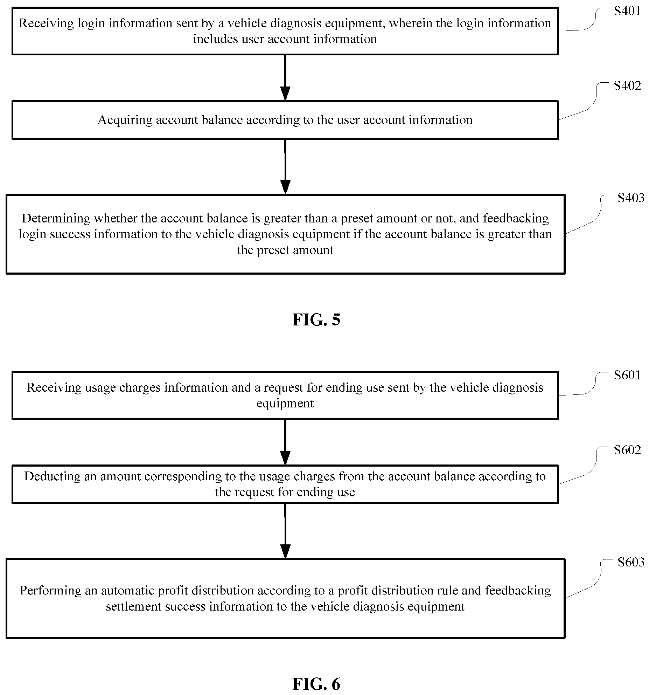

This embodiment provides a method of using the vehicle diagnosis equipment, the method of using the vehicle diagnosis equipment is applied in a server, as shown in FIG. 5, the method of using the vehicle diagnosis equipment comprises:
Step 501: receiving login information sent by the vehicle diagnosis equipment, the login information includes user account information.
Step 502: acquiring the account balance information according to the user account information.
Step 503, determining whether the account balance is greater than a preset amount or not, and returning the login success information to the vehicle diagnosis equipment if the account balance is greater than the preset amount.

In the embodiment of the present application, regarding the details of the part of the steps 501-503 which is the same as or similar to the steps 201-203, or is the same as or similar to the steps 301-304, reference can be made to relevant descriptions in the steps 201-203 or in the steps 301-304, it is not repeatedly described herein.

It can be seen that, in the embodiment of the present application, since the login information sent by the vehicle diagnosis equipment can be determined, and the login success information is returned to the vehicle diagnosis equipment when the account balance is determined to be greater than the preset amount, such that the user can login the vehicle diagnosis equipment and then directly use the vehicle diagnosis equipment, the convenience of using the vehicle diagnosis equipment can be provided to the user, and the utilization efficiency of the vehicle diagnosis equipment can be improved; meanwhile, the usage permission of the vehicle diagnosis equipment is granted according to the relationship between the balance and the preset amount, which facilitates the user to use without paying cash pledge, so that the user experience is improved.

### Embodiment five

This embodiment provides a method of using the vehicle diagnosis equipment, the method of using the vehicle diagnosis equipment in this embodiment is applied to a server, this embodiment is based on embodiment four and further describes the steps in embodiment four, regarding the part of this embodiment that is the same or similar to that of embodiment four, reference can be made to relevant descriptions in embodiment four, and it is not repeatedly described herein. As shown in FIG. 6, the method of using vehicle diagnosis equipment further comprises:
step 601, receiving usage charges information and a request for ending use sent by the vehicle diagnosis equipment;
step 602, deducting an amount corresponding to the usage charges from the account balance according to the request for ending use; and
step 603, performing an automatic profit distribution according to a profit distribution rule and returning settlement success information to the vehicle diagnosis equipment.

In one embodiment, before receiving usage charges information and a request for ending use sent by the vehicle diagnosis equipment, the method further comprises: monitoring the account balance information; acquiring changed account balance information when a change of the account balance information is detected; determining whether the changed account balance is greater than the preset amount or not; and sending, if the changed account balance information is less than the preset amount, the abnormal prompt information and the account balance change information to the vehicle diagnosis equipment in order that the vehicle diagnosis equipment prompts the user and returns a processing result of the user.

In the embodiment of the present application, regarding the details of the part of the steps 601-603 which is the same as or similar to the steps 401-403, reference can be made to relevant descriptions in the steps 401-403, it is not repeatedly described herein.

It can be seen that, in the embodiment of the present application, by monitoring the user account balance information in real time, continuing to use until a settlement is done normally under the condition that the balance is normal, and do not displaying the diagnosis data and the diagnosis result under the condition that the balance is abnormal, in one aspect, the normal use requirement of the user is guaranteed; in another aspect, proper earnings of an owner of the equipment is ensured, such that the economic benefits of the vehicle diagnosis equipment can be well guaranteed.

### Embodiment six

This embodiment of the present application provides a system of using a vehicle diagnosis equipment, which is used for executing the steps involved in embodiment one, as shown in FIG. 1, the illustrated system of using vehicle diagnosis equipment includes a vehicle diagnosis equipment 102 and a server 101;
the vehicle diagnosis equipment 102 is configured to: receive a usage request of a user, display a login interface and receive a login information entered by the user, send the login information to the server, where the login information includes user account information; display a charging mode of usage according to the login success information and grant the corresponding usage permission to the user for the user to use according to the charging mode of usage selected by the user;
the server 101 is configured to: acquire account balance information according to the account information, determine whether the account balance is greater than a preset amount or not, and feedback login success information to the vehicle diagnosis equipment if the account balance is greater than the preset amount.

It can be seen that, in the embodiment of the present application, the usage request of the user is received through the vehicle diagnosis equipment, the login interface is displayed according to the usage request, the login information entered by the user is received, and the login information is sent to the server, the login information includes the user account information; the server acquires the account balance information according to the account information and determines whether the account balance is greater than the preset amount or not, the login success information is returned to the vehicle diagnosis equipment if the account balance is greater than the preset amount; the vehicle diagnosis equipment displays the charging mode of usage according to the login success information and grants the corresponding usage permission to the user for the user to use according to the charging mode of usage selected by the user. According to the embodiment of the present application, the convenience of using the vehicle diagnosis equipment can be provided to the user, and the utilization efficiency of the vehicle diagnosis equipment can be improved; meanwhile, the usage permission of the vehicle diagnosis equipment is granted according to the relationship between the balance and the preset amount, which facilitates the user to use without paying cash pledge, so that the user experience is improved.

### Embodiment seven

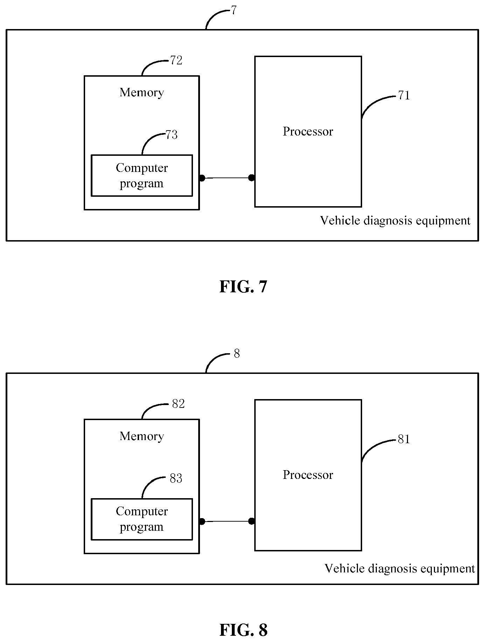

This embodiment provides a schematic view of vehicle diagnosis equipment, as shown in FIG. 7, the vehicle diagnosis equipment in this embodiment comprises: a processor 71, a memory 72 and computer program 73 stored in the memory 72 and executable by the processor 71, when the computer program 73 is executed, the processor 71 is configured to implement: receiving a usage request of a user, displaying a login interface according to the usage request, receiving login information entered by a user, where the login information includes user account information; sending the login information to a server in order that the server acquires account balance information according to the account information and returns login success information to the vehicle diagnosis equipment if the account balance is determined to be greater than the preset amount; and displaying a charging mode of usage according to the login success information, and granting a corresponding usage permission to the user for the user to use according to the charging mode of usage selected by the user.

In one embodiment, the processor executes the computer program to implement the steps which particularly comprises: the charging mode of usage includes a pay per view mode, the corresponding usage permission is granted to the user for the user to use according to the pay per view mode selected by the user when the received charging mode of usage selected by the user is the pay per view mode, granting a corresponding usage permission to the user for the user to use according to the pay per view mode selected by the user particularly comprises: displaying diagnosis software selection interface with at least two vehicle type diagnosis software and acquiring usage rules of pay per view of the at least two vehicle type diagnosis software; obtaining selection information for a vehicle type diagnosis software of a user and reminding the user of a corresponding usage rules of pay per view; determining target vehicle type diagnosis software according to a confirmation instruction of the user, and loading the target vehicle type diagnosis software in order that the user uses the target vehicle type diagnosis software according to the usage rules of pay per view.

In one embodiment, the processor executes the computer program to implement the steps which particularly comprises: the charging mode of usage includes a pay per usage duration mode, when the received charging mode of usage selected by the user is the pay per usage duration mode, a corresponding usage permission is granted to the user according to the charging mode of usage selected by the user, granting a corresponding usage permission to the user for the user to use according to the pay per usage duration mode selected by the user particularly comprises: displaying diagnosis software selection interface with at least two vehicle type diagnosis software and acquiring usage rules of pay by usage duration of the at least two vehicle type diagnosis software; receiving a vehicle type diagnosis software selected by the user, and reminding the user of a corresponding usage rules of pay per usage duration; determining the target vehicle type diagnosis software according to the confirmation instruction of the user, and loading the target vehicle type diagnosis software in order that the user uses the target vehicle diagnosis software according to the usage rules of pay per usage duration.

In one embodiment, the processor is further configured to implement: receiving a request for ending use from the user; calculating usage charges and reminding the user according to the request for ending use; sending, after the confirmation instruction of the user is obtained, the usage charges and the request for ending use to the server in order that the server deducts an amount corresponding to the usage charges from the account balance, performs an automatic profit distribution according to a profit distribution rule and returns settlement success information; and determining a end of use according to the received settlement success information.

In one embodiment, the processor is further configured to implement: receiving abnormal prompt information and account balance change information of the account information sent by the server; displaying the abnormal prompt information to the user; and receiving the abnormal information processed by the user and transmitting a processing result to the server.

It can be seen that, in the embodiment of the present application, in one aspect, due to the fact that the vehicle diagnosis equipment can be directly used according to the selected charging mode of usage as needed after the user logins the vehicle diagnosis equipment, the convenience of using the vehicle diagnosis equipment is provided to the user, and the utilization efficiency of the vehicle diagnosis equipment can be improved; meanwhile, the usage permission of the vehicle diagnosis equipment is granted according to the relationship between the balance and the preset amount, which facilitates the user to use the vehicle diagnosis equipment without paying cash pledge, so that user's experience is improved; in another aspect, by monitoring the user account balance information in real time, continuing to use until a settlement is done normally under the condition that the balance is normal, and do not displaying the diagnosis data and the diagnosis result under the condition that the balance is abnormal, an economic relationship between the user and the owner of the equipment is well balanced, and economic benefits of use of the vehicle diagnosis equipment is improved.

### Embodiment eight

This embodiment provides a schematic view of a server, as shown in FIG. 8, the server 8 in this embodiment comprises: a processor 81, a memory 82 and computer program 83 stored in the memory 82 and executable by the processor 81. The processor 81 is configured to execute the computer program 83 to implement: receiving login information sent by a vehicle diagnosis equipment, where the login information includes user account information; acquiring account balance information according to the user account information; determining whether the account balance is greater than a preset amount or not, and returning login success information to the vehicle diagnosis equipment if the account balance is greater than the preset amount.

In one embodiment, the processor is further configured to execute the computer program to implement: receiving usage charges information and a request for ending use sent by the vehicle diagnosis equipment; deducting an amount corresponding to the usage charges from the account balance according to the request for ending use; and performing an automatic profit distribution according to a profit distribution rule and returning settlement success information to the vehicle diagnosis equipment.

In one embodiment, the processor is further configured to execute the computer program to implement: monitoring the account balance information before receiving the usage charges information and the request for ending use sent by the vehicle diagnosis equipment; acquiring changed account balance information when a change of the account balance information is detected; determining whether the changed account balance is greater than the preset amount or not; and sending, if the changed account balance information is less than the preset amount, the abnormal prompt information and the account balance change information to the vehicle diagnosis equipment in order that the vehicle diagnosis equipment prompts the user and returns a processing result of the user.

It can be seen that, in the embodiment of the present application, in one aspect, due to the fact that the vehicle diagnosis equipment can be directly used according to the selected charging mode of usage as needed after the user logins the vehicle diagnosis equipment, the convenience of using the vehicle diagnosis equipment is provided to the user, and the utilization efficiency of the vehicle diagnosis equipment can be improved; meanwhile, the usage permission of the vehicle diagnosis equipment is granted according to the relationship between the balance and the preset amount, which facilitates the user to use the vehicle diagnosis equipment without paying cash pledge, so that user's experience is improved; in another aspect, by monitoring the user account balance information in real time, continuing to use until a settlement is done normally under the condition that the balance is normal, and do not displaying the diagnosis data and the diagnosis result under the condition that the balance is abnormal, the economic relationship between the user and the owner of the equipment is well balanced, and economic benefits of use of the vehicle diagnosis equipment is improved.

It can be clearly understood by the ordinarily skilled one in the art that, for describing conveniently and concisely, regarding a specific working process of the descriptions mentioned above, reference can be made to a corresponding process in the foregoing method embodiments, it is not repeatedly described herein.

In some embodiments provided by the present application, it should be understood that, the disclosed system, vehicle diagnosis equipment, server and method can be implemented in other manners. The units described as separate components could or could not be physically separate. Parts or all of the elements could be selected according to practical requirements to achieve the object of the present embodiment.

If the functionalities are achieved in the form of software functional units, and are sold or used as an independent product, they can be stored in a computer readable storage medium. Based on this understanding, the technical solution of the present application, or the part that is contributable to related art, or a part of the technical solution can be embodied in the form of software product essentially, the computer softer product is stored in a storage medium and includes an instruction that enables a computer device (which can be a personal computer, a server, or a network device, and the like) to execute all or part of steps of methods in the various embodiments of the present application. The aforesaid storage medium includes: various mediums capable of storing program codes such as USB flash disk, mobile hard disk, computer storage device, ROM (Read-Only Memory), RAM (Random Access Memory), hard disk, optical disk, and the like.

Any modification, equivalent replacement, improvement, and so on, which are made within the spirit and the principle of the present application, should be included in the protection scope of the present application.

## Claims

1. A method of using a vehicle diagnosis equipment, **characterized in that**, the method comprises steps of:
receiving a usage request of a user with the vehicle diagnosis equipment, displaying a login interface according to the usage request and receiving login information entered by a user, and sending the login information to a server, wherein the login information includes user account information;
acquiring account balance information with the server according to the account information, determining whether the account balance is greater than a preset amount or not, and feedbacking login success information to the vehicle diagnosis equipment if the account balance is greater than the preset amount; and
displaying a charging mode of usage with the vehicle diagnosis equipment according to the login success information, and granting a corresponding usage permission to the user according to the charging mode of usage selected by the user.

2. A method of using a vehicle diagnosis equipment, **characterized in that**, the method is applied to the vehicle diagnosis equipment and comprises:
receiving a usage request of a user, and displaying a login interface according to the usage request;
receiving login information entered by the user, wherein the login information includes user account information;
sending the login information to a server in order that the server obtains the account balance information according to the account information and returns login success information if the account balance information is determined to be greater than a preset amount;
displaying a charging mode of usage according to the login success information and granting a corresponding usage permission to the user for the user to use according to the charging mode of usage selected by the user.

3. The method according to claim 2, **characterized in that**, the charging mode of usage includes a pay per view mode, when the received charging mode of usage selected by the user is the pay per view mode, the step of granting a corresponding usage permission to the user for the user to use according to the charging mode of usage selected by the user particularly comprises:
displaying diagnosis software selection interface with at least two vehicle type diagnosis software and acquiring usage rules of pay per view for the at least two vehicle type diagnosis software;
receiving selection for a vehicle type diagnosis software of a user and reminding the user of a corresponding usage rules of pay per view;
determining a target vehicle type diagnosis software according to a confirmation instruction of the user, and loading the target vehicle type diagnosis software in order that the user uses the target vehicle type diagnosis software according to the usage rules of pay per view.

4. The method according to claim 2, **characterized in that**, the charging mode of usage includes a pay by usage duration mode, when the received charging mode of usage selected by the user is the pay by usage duration mode, the step of granting a corresponding usage permission to the user for the user to use according to the charging mode of usage selected by the user particularly comprises:
displaying diagnosis software selection interface with at least two vehicle type diagnosis software and acquiring usage rules of pay by usage duration for the at least two vehicle type diagnosis software;
receiving selection for a vehicle type diagnosis software of the user, and reminding the user of a corresponding usage rules of pay by usage duration;
determining the target vehicle type diagnosis software according to the confirmation instruction of the user and loading the target vehicle type diagnosis software in order that the user uses the target vehicle diagnosis software according to the usage rules of pay by usage duration.

5. The method according to any one of claims 2-4, **characterized in that**, the method further comprises:
receiving a request for ending use from the user;
calculating usage charges and reminding the user according to the request for ending use;
sending the usage charges and the request for ending use to the server after the confirmation instruction of the user is obtained, in order that the server deducts the amount corresponding to the usage charges from the account balance, performs an automatic profit distribution according to a profit distribution rule and returns settlement success information; and
determining end of use according to the received settlement success information.

6. The method according to claim 5, **characterized in that**, before said receiving the request for ending use from the user, the method further comprises:
receiving abnormal prompt information and account balance change information of the account information sent by the server;
displaying the abnormal prompt information to the user; and
receiving processing for the abnormal information by the user and transmitting a processing result to the server.

7. A method of using a vehicle diagnosis equipment, **characterized in that**, the method is applied to a server and comprises:
receiving login information sent by a vehicle diagnosis equipment, wherein the login information includes user account information;
acquiring account balance information according to the user account information; and
determining whether the account balance is greater than a preset amount or not, and returning login success information to the vehicle diagnosis equipment if the account balance is greater than the preset amount.

8. The method according to claim 7, **characterized in that**, the method further comprises:
receiving usage charges information and a request for ending use sent by the vehicle diagnosis equipment;
deducting an amount corresponding to the usage charges from the account balance according to the request for ending use; and
performing an automatic profit distribution according to a profit distribution rule, and returning settlement success information to the vehicle diagnosis equipment.

9. The method according to claim 8, **characterized in that**, before the step of receiving usage charges information and a request for ending use sent by the vehicle diagnosis equipment, the method further comprises:
monitoring the account balance information;
acquiring changed account balance information when a change of the account balance information is detected;
determining whether the changed account balance information is greater than the preset amount or not; and
sending the abnormal prompt information and the account balance change information to the vehicle diagnosis equipment, in order that the vehicle diagnosis equipment prompts the user and returns a processing result of the user.

10. A system of using a vehicle diagnosis equipment, **characterized in that**, the system comprises the vehicle diagnosis equipment and a server;
wherein the vehicle diagnosis equipment is configured to: receive a usage request of a user, display a login interface and receive login information entered by the user, and send the login information to the server, the login information including user account information, display a charging mode of usage according to login success information when the server returns the login success information and grant a corresponding usage permission to the user according to the charging mode of usage selected by the user;
the server is configured to: acquire account balance information according to the account information, determine whether the account balance is greater than a preset amount or not, and feedback login success information to the vehicle diagnosis equipment if the account balance is greater than the preset amount.

11. A vehicle diagnosis equipment, comprising a memory, a processor and a computer program stored in the memory and executable by the processor, **characterized in that**, when the computer program is executed, the processor is configured to implement:
receiving a usage request of a user, and displaying a login interface according to the usage request;
receiving login information entered by the user, wherein the login information includes user account information;
sending the login information to a server in order that the server obtains the account balance information according to the account information and returns login success information if the account balance information is determined to be greater than a preset amount;
displaying a charging mode of usage according to the login success information and granting the corresponding usage permission to the user for the user to use according to the charging mode of usage selected by the user.

12. The vehicle diagnosis equipment according to claim 11, **characterized in that**, the processor is configured to execute the computer program to implement method steps comprising:
the charging mode of usage includes a pay per view mode,
granting a corresponding usage permission to the user for the user the user according to the pay per view mode selected by the user when the received charging mode of usage selected by the user is the pay per view mode, said granting a corresponding usage permission to the user for the user the user according to the pay per view mode selected by the user particularly comprises:
displaying diagnosis software selection interface with at least two vehicle type diagnosis software and acquiring usage rules of pay per view for the at least two vehicle type diagnosis software;
receiving selection for a vehicle type diagnosis software of a user and reminding the user of a corresponding usage rules of pay per view;
determining a target vehicle type diagnosis software according to a confirmation instruction of the user, and loading the target vehicle type diagnosis software in order that the user uses the target vehicle type diagnosis software according to the usage rules of pay per view.

13. The method according to claim 11, **characterized in that**, the processor is further configured to execute the computer program to implement method steps comprising:
the charging mode of usage includes a pay per usage duration mode,
granting a corresponding usage permission to the user for the user to use according to the pay per usage duration mode selected by the user when the received charging rule of usage selected by the user is the pay per usage duration mode, said granting a corresponding usage permission to the user for the user to use according to the pay per usage duration mode selected by the user particularly comprises:
displaying diagnosis software selection interface with at least two vehicle type diagnosis software and acquiring usage rules of pay by usage duration for the at least two vehicle type diagnosis software;
receiving selection for a vehicle type diagnosis software of the user, and reminding the user of a corresponding usage rules of pay per usage duration;
determining the target vehicle type diagnosis software according to the confirmation instruction of the user and loading the target vehicle type diagnosis software, in order that the user uses the target vehicle diagnosis software according to the usage rules of pay per usage duration.

14. The vehicle diagnosis equipment according to any one of claims 11-13, **characterized in that**, the processor is further configured to execute the computer program to implement method steps comprising:
receiving a request for ending use from the user;
calculating usage charges and remaindering the user according to the request for ending use;
sending the usage charges and the request for ending use to the server after the confirmation instruction of the user is obtained, in order that the server deducts an amount corresponding to the usage charges from the account balance, performs an automatic profit distribution according to a profit distribution rule and returns settlement success information; and
determining end of use according to the received settlement success information.

15. The vehicle diagnosis equipment according to any one of claim 14, **characterized in that**, the processor is further configured to execute the computer program to implement steps comprising:
receiving abnormal prompt information and account balance change information of the account information sent by the server;
displaying the abnormal prompt information to the user; and
receiving processing for the abnormal information by the user and transmitting a processing result to the server.

16. A server, comprising a memory, a processor and computer program stored in the memory and executable by the processor, **characterized in that**, the processor is configured to execute the computer program to implement:
receiving login information sent by a vehicle diagnosis equipment, wherein the login information includes user account information;
acquiring account balance information according to the user account information; and
determining whether the account balance is greater than a preset amount or not, and returning login success information to the vehicle diagnosis equipment if the account balance is greater than the preset amount.

17. The server according to claim 16, **characterized in that**, the processor is further configured to execute the computer program to implement:
receiving usage charges information and a request for ending use sent by the vehicle diagnosis equipment;
deducting an amount corresponding to the usage charges from the account balance according to the request for ending use; and
performing an automatic profit distribution according to a profit distribution rule and returning settlement success information to the vehicle diagnosis equipment.

18. The server according to claim 17, **characterized in that**, the processor is further configured to execute the computer program to implement:
monitoring the account balance information before receiving the usage charges information and the request for ending use sent by the vehicle diagnosis equipment;
acquiring changed account balance information when a change of the account balance information is detected;
determining whether the changed account balance information is greater than the preset amount or not; and
sending, if the changed account information is less than the preset amount, the abnormal prompt information and the account balance change information to the vehicle diagnosis equipment, in order that the vehicle diagnosis equipment prompts the user and returns a processing result of the user.
